# EUROPEAN PATENT SPECIFICATION

(11) **EP 2 478 966 B1**
(45) Date of publication and mention of the grant of the patent: **21.12.2016**
(21) Application number: 10799966.6
(22) Date of filing: 24.05.2010
(51) Int. Cl.: F16L 11/12, F16L 11/22, A01G 25/02

(54) **DRIP HOSE**
TROPFSCHLAUCH
TUYAU GOUTTE À GOUTTE

(30) Priority: 17.07.2009 KR 20090065265
(43) Date of publication of application: 25.07.2012
(73) Proprietor: Sam Won Industry Co., Ltd., Incheon-city 404-170 (KR)
(72) Inventor: KIM, Jae Gon, Incheon-city 402-200 (KR)
(74) Representative: Mittler, Enrico
(86) International application number: PCT/KR2010/003242
(87) International publication number: WO 2011/007954

(56) References cited:
- FR-A1- 2 386 983
- KR-A- 20030 004 743
- KR-B1- 100 754 779
- KR-Y1- 200 401 878
- KR-Y1- 200 401 878
- KR-Y1- 960 010 463
- US-A- 4 247 051

## Description

### TECHNICAL FIELD

The present invention relates to a drip hose, more specifically, to a drip hose in which are formed a first water pathway and a second water pathway and in which the second water pathway is partitioned into a plurality of unit sections, thereby ensuring that the amount of water discharged through respective water discharge ports formed in each unit section is constant regardless of the water pressure generated in the drip hose, thus inducing uniform growth of the crops.

### BACKGROUND ART

The drip hose is intended to be installed on the ground adjacent to roots of the crops in cultivation of the crops to supply the water inside the hose to the ground through the water passage holes formed on outer circumference of the hose. In conventional drip hose, the water passage holes are extremely finely formed such that the small amount of the water can be continuously supplied to the ground, thus the water is supplied in a drop form to the ground through the water passage holes.

In general, since water pressure is high on a water supply side in the hose and the farther the distance from the water supply side, the lower the water pressure becomes, generally, the supply amount of the water is large at position where the water pressure is high, while the supply amount of the water is small at position where the water pressure is low, and the drip hose is intended to supply the same amount of the water to the crops through the water passage holes regardless of the water pressure in the hose.

Furthermore, a good drip hose can be said to be a drip hose wherein the amount of the water supplied through respective water passage holes is constant regardless of the water pressure in the hose.

That is, since the growth rate of the crops becomes different depending on the amount of the water supplied to the crops, the amount of the water supplied through a plurality of water passage holes formed on the drip hose should be uniform in order to induce the uniform growth.

Therefore, so far, various types of drip hoses have been proposed and are used for canceling the water pressure generated in the drip hose, For example, resistance body with a plurality of resistance structures is fitted in the water passage hole for supplying the water from the drip hose to the ground or the drip hose is formed as a double tube. In the case of the drip hose formed as a double tube, synthetic resin film is rolled in a circular form in such a manner that portions of the film are overlapped and ends of the film are glued, thus inner water pathway is formed in the inside and outer water pathway is formed in overlap portion, and seal is inserted in inner longitudinal direction of the outer water pathway, and a plurality of inner water passage holes are formed at a regular interval in the inner and outer water pathways, and outer water passage holes are formed through which the outer water pathway and outer circumference of the hose communicate with each other, thus the water supplied from the inner water pathway is passed to the outer water pathway through the inner water passage holes, and then is supplied to the outside of the hose through the outer water passage holes.

However, the conventional drip hose constructed as described above has a problem that although the water supplied from the inner water pathway to the outer water pathway reach the outer water passage holes, difference in the amount of the water supplied to the outer water pathway is occurred due to difference in the water pressure generated in the inner water pathway.

Furthermore, the conventional drip hose has a problem that since commonly the hose is a synthetic resin hose, when the water is not supplied, the inside of the hose becomes dry to adhere closely to itself, thus even if the water is supplied, the supplied water cannot pass through the inside of the hose.

Meanwhile, one of previous applications relating to the drip hose as described above is Registered Utility Model No. 0401878 (KR 200401878Y1) titled "drop hose", wherein as shown in Figs 1 a and 1 b, the spacing between a inner circumferential wall (106) and outer circumferential wall (107) is kept constant by spacer protrusion (105), and if the water is supplied to inner water pathway (101), water pressure is applied to the inner circumferential wall (106), thereby making the diameter of the inner circumferential wall (106) larger than or equal to that of the outer circumferential wall (107), whereby the inner circumferential wall strongly adheres closely to the outer circumferential wall (107) to which the water pressure is not applied, and as a result, the cross sectional area of outer water pathway (103) defined by the spacer protrusion (105) is reduced, and pressing force applied to the inner circumferential wall (106) is low at a location in the inner water pathway (101) where the water pressure is low, thus wider outer water pathway (103) is obtained by the spacer protrusion (105), therefore, the amount of the water supplied through each outer water passage hole (104) is made constant. However, the previous Registered Utility Model as described above also has problems that the water pressure in the drip hose cannot be kept constant only by the spacer protrusion (105) and close adhesion between the hoses cannot be avoided in dry condition.

Furthermore, as shown in Fig. 2, a previous Registered Patent No. 0761493 (KR 100761493B) titled "Decompression liner for water-drip hose, hose thereof" describes a liner (L) allowing water discharge part (T1) to be formed by selectively using incision method and picking method in punching process because punching protrusions in water discharge section formed in a processing surface of the liner (L) for a drip hose (H) are formed higher compared to resistance protrusions of the pressure-decreasing section, whereby when the punching protrusions and tube are thermally joined, corresponding protrusions are formed due to the punching protrusions on the outer surface of the tube, and a drip hose (H) is provided which is formed by joining the liner (L) and the tube. However, since the separate liner (L) has to be joined to the hose (T) and the water discharge part (T1) is punched in the hose (T), problems are present that production cost is increased and the water pressure cannot be adjusted only by the liner.

The closest prior art is a drip hose according to the preamble of claim 1, which is known from the embodiment of figure 6 of US4247051A.

### DISCLOSURE OF THE INVENTION

Therefore, an object of the present invention is to provide a drip hose which can induce uniform growth of the crops by discharging the same amount of the water through water discharge port formed in each unit section regardless of the water pressure generated in the drip hose, by forming a first water pathway and second water pathway together in the drip hose and partitioning the second water pathway into a plurality of unit sections.

Furthermore, another object of the present invention is to provide a drip hose wherein a water discharge port of the drip hose is provided in each unit section, thus even if foreign matter enters the inside of the drip hose, it interferes only with water discharge port formed in one unit section, thus damage to all of the crops can be avoided.

Furthermore, yet another object of the present invention is to provide a drip hose wherein by forming fine unevenness part on the inside of the drip hose, the inside of the drip hose is prevented from adhering closely to itself in dry condition.

A drip hose of the present invention for achieving the above object is characterized in that it is a drip hose formed by fusing both ends of flat resin film, wherein the both ends of the flat resin film are overlapped and fused in such a way that two fusion lines are formed in the longitudinal direction, thus by means of the fusion lines, a first water pathway is formed and a second water pathway is formed in overlap portion, and at least one fusion line is additionally formed in the width direction in the overlap portion, thus the overlap portion is partitioned into at least one unit section, and water supply port for supplying the water from the first water pathway to the second water pathway and water discharge port for discharging the water from the second water pathway to the outside are formed in the longitudinal fusion lines constituting the unit section.

According to the present invention, a useful effect is provided that the amount of water is supplied to the crops through the water discharge port of the second water pathway regardless of the water pressure in the first water pathway inside the drip hose, thus the uniform growth of the crops is induced, and even if foreign matter enters the inside of the drip hose, the foreign matter interferes only with the water discharge port formed in one unit section, therefore, clogging phenomenon of the drip hose is minimized and thus damage to all of the crops can be avoided.

Furthermore, since the fine unevenness part is formed on the inside of the drip hose, the inside of the drip hose is prevented from adhering closely to itself in dry condition, and thus convenience of use is provided.

Furthermore, an effect is provided that since the drip hose of the present invention is simpler to produce compared to the conventional drip hose, the unit cost of product can be lowered.

### BRIEF DESCRIPTION OF THE DRAWING

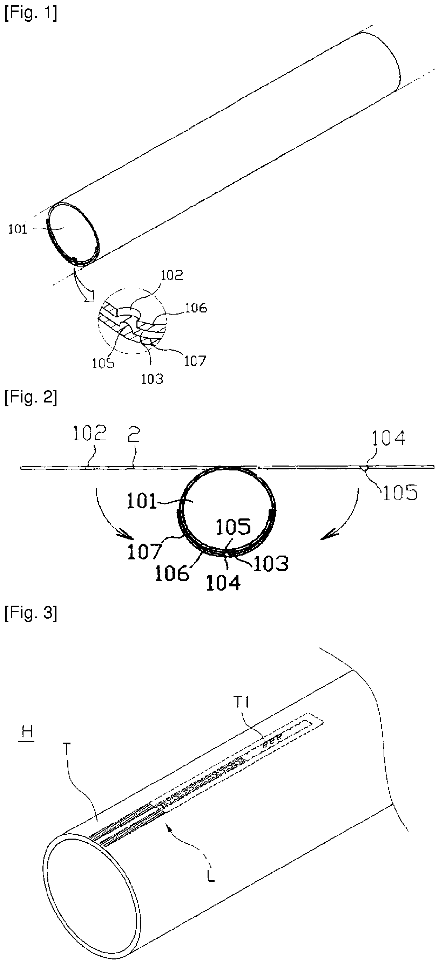

Figs. 1 and 2 are views showing conventional drip hose
Fig. 3 is a view showing another conventional drip hose.
Fig. 4 is a perspective view of a drip hose according to an example of the present invention.
Fig. 5 is a plane view of the drip hose according to the example of the present invention.
Fig. 6 is a sectional view taken along line B - B in Fig. 4.
Fig. 7 is a sectional view taken along line C - C in Fig. 4.
Fig. 8 is a sectional view taken along line D - D in Fig. 4.
Fig. 9 is a perspective view of a flat film according to the present invention.
Fig. 10 is a plane view of the drip hose not according the present invention.
Fig. 11 is a view showing a state where the drip hose according to the present invention is used.

*** list of reference numerals ***

| | |
|---|---|
| 1 : first water pathway | 2 : second water pathway |
| 3 : unit section | 10 : flat resin film |
| 10a : fine unevenness part | 11, 11', 11" : fusion line |
| 11a: water supply port | 11b : water discharge port |
| 11c: opening | 21 : unit water pathway |

### MODES FOR CARRYING OUT THE INVENTION

Hereinafter, the present invention will be described with reference to the attached drawings as follows.

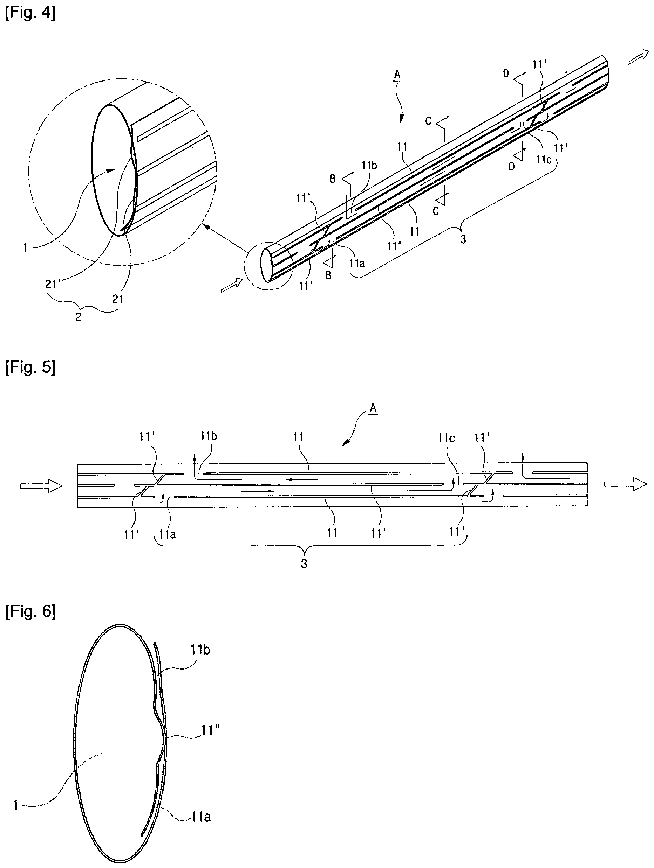

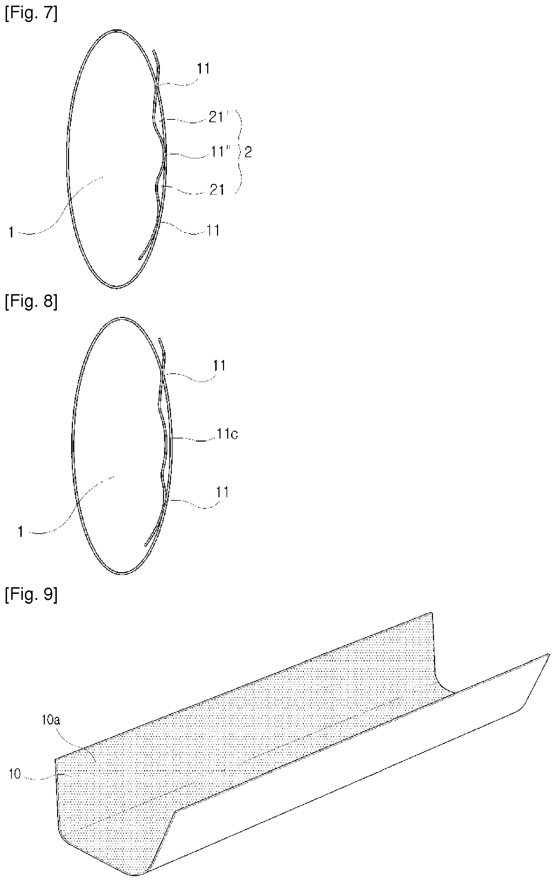

Fig. 4 is a perspective view of a drip hose according to an example of the present invention, Fig. 5 is a plane view of the drip hose according to the example of the present invention, Fig. 6 is a sectional view taken along line B - B in Fig. 4, Fig. 7 is a sectional view taken along line C - C in Fig. 4, Fig. 8 is a sectional view taken along line D - D in Fig. 4, and Fig. 9 is a perspective view of a flat film according to the present invention. The drip hose (A) of the present invention comprises a first water pathway (1), second water pathway (2) and unit section (3).

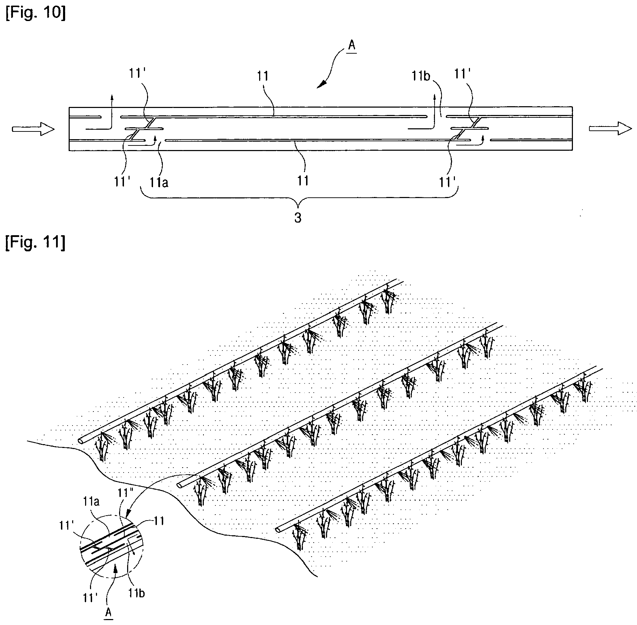

In the present invention, for the sake of convenience, only a section of the drip hose cut in the longitudinal direction thereof is illustrated without illustrating the whole of the hose in the longitudinal direction thereof. Naturally, the drip hose may be extended with repeated identical structures, as shown in Fig. 11.

First, an example of the present invention will be described as follows.

The drip hose (A) of the present invention is formed by rolling a flat resin film (10) in a annular form and fusing both ends thereof, wherein the both ends of the flat resin film (10) partially overlap with each other and are fused in such a manner that two fusion lines (11) are longitudinally formed spaced from each other in the overlap portion. In this connection, it is most preferred that the two longitudinal fusion lines (11) are formed parallel with each other, to which the present invention is not limited.

Therefore, since the ends of the flat resin film (10) are thermally fused to each other by the fusion lines (11), the first water pathway (1) is formed inside the annularly rolled flat resin film (10) and the second water pathway (2) is formed in the joint portion of the flat resin film (10) by the two fusion lines (11).

In addition, by additionally forming at least one fusion line (11') in width direction in the overlap portion, the two longitudinally formed fusion lines (11) and the fusion lines (11') of the width direction abut to each other, thus the overlap portion is partitioned into at least one unit section (3).

Then, the drip hose (A) has a plurality of unit sections (3), and at least two fusion lines (11') of the width direction are formed, wherein two neighboring fusion lines (11') have the same interval, thus the plurality of unit sections (3) have the same length, whereby cultivation interval of crops can be constantly adjusted.

That is, the unit section (3) comprises the two longitudinal fusion lines (11) and two fusion lines (11') of the width direction, and at least one fusion line (11") is additionally formed in longitudinal direction in the middle of the unit section (3), whereby the second water pathway (2) of the unit section (3) is formed by at least two unit water pathways (21, 21').

In this connection, it is sufficient that the fusion line (11') of the width direction is formed so as to abut at its ends to the two longitudinally formed fusion lines (11), and the fusion line of the width direction does not need to be perpendicular to the longitudinal fusion lines (11). Furthermore, as shown in Figs. 4 and 5, the fusion line of the width direction does not need to be formed as one straight line, instead, may be formed in such a way that it abuts to one of the two longitudinal fusion lines (11) and the additionally formed fusion line (11") and again abuts to the additionally formed fusion line (11") and the other of the two longitudinal fusion lines (11), so the fusion line of the width direction is not limited in its form.

Furthermore, in the drip hose (A), the first water pathway (1) and second water pathway (2) and each unit water pathway (21, 21') communicate with one another such that the water supplied to the first water pathway (1) can flow, wherein, as shown in Fig. 6, water supply port (11a) is formed in one of the longitudinal fusion lines (11) forming the unit section (3), i.e., the fusion line (11) on the end of the flat resin film (10) positioned inside the drip hose (A), thus the water can be supplied from the first water pathway (1) to the second water pathway (2).

Furthermore, water discharge port (11b) having the same form as the water supply port (11a) is formed in the other longitudinal fusion line (11), i.e., the fusion line (11) on the end of the flat resin film (10) positioned outside the drip hose (A), thus the water supplied to the second water pathway (2) can be discharged to the outside, and as shown in Fig. 8, an opening (11c) is formed in the longitudinal fusion line (11") formed additionally, whereby the two rows of the unit water pathways (21, 21') communicate with each other. In addition, as shown in Fig. 7, the portion where the water supply port (11a), water discharge port (11b) and opening (11c) are not formed is naturally partitioned into the first water pathway (1) and the unit water pathways (21, 21'), respectively.

At this time, the water supply port (11a), water discharge port (11b) and opening (11c) are all in the same form, and for providing these holes and opening, separate construction do not need to be added, rather, it is sufficient that a portion is not fused and thus is kept in opened state when forming the fusion lines (11, 11") by fusing the joint portion of the flat film (10).

In addition, for positions in which the water supply port (11a), water discharge port (11 b) and opening (11c) are formed, as shown in Fig. 5, the water supply port (11a) is formed in one side of any one of the longitudinal fusion lines (11) constituting the unit section (3), and the opening (11c) is formed in the other side of the additionally formed fusion line (11"), and the water discharge port (11b) is formed in one side of the other of the longitudinal fusion lines (11) constituting the unit section (3), whereby the water supplied from the first water pathway (1) can smoothly flow. That is, the water supplied to the first water pathway (1) is supplied to one unit water pathway (21) of the second water pathway (2) through the water supply port (11a), and the water, which has passed through the one unit water pathway (21), is supplied to the other unit water pathway (21') through the opening (11c) and passes through the other unit water pathway, and then is discharged outwardly to be supplied to the crops through the water discharge port (11b) formed on end side of the other unit water pathway (21'). Thus, supply line for the discharged water is unified by limiting the positions in which the water supply port (11a), water discharge port (11b) and opening (11c) are formed.

Therefore, due to the construction of the unit section (3) as described above, the pressure of the water passing through the unit water pathway (21) of the second water pathway (2) is kept constant in each unit section (3) regardless of the pressure of the water passing through the first water pathway (1), and the amount of the water discharged through the each water discharge port (11 b) is kept constant.

Meanwhile, the fusion lines (11, 11', 11") of the present invention are formed by means of thermal fusion or high-firequency fusion method, and the thermal fusion and high-frequency fusion are already known techniques, so the detailed description thereof will be omitted.

Then, the flat resin film (10) used for the present invention may be made of various synthetic resin material such as polyethylene(PE), polyp ropylen e(PP) etc., and the material used for the film is not limited, and another additives may be mixed with the synthetic resin, and all kinds of resin films constituting the conventional drip hose or common hose may be utilized.

However, as shown in Fig. 9, since the flat resin film (10) of the present invention is formed on its one surface with fine unevenness part (10a), the insides of the first water pathway (1) and second water pathway (2) have the fine unevenness part (10a), and due to the fine unevenness part (10a), the hose (A) can be prevented from adhering closely to itself even if the inside of the hose is dry when the drip hose (A) is not used

That is, the conventional hose has a problem that since the fine unevenness part (10a) is not formed on the inside of the hose, inner circumferential surface of the hose adheres closely to itself when the hose is dry, and even if the water is supplied, due to the close adhesion force, the water cannot pass through the inside of the hose. However, the present invention solves such a problem by means of the fine unevenness part (10a).

The fine unevenness part (10a) can be formed in various methods; for example, resin material is heated to be extruded in a film extruder, and the extruded film with a high surface temperature immediately passes between a lower roller with fine grooves formed thereon and a upper roller with no projections formed thereon, whereby the fine unevenness part (10a) is formed only on one side surface of the film. In this connection, the number, width etc. of unevenness in the fine unevenness part (10a) is not limited.

Meanwhile, since the drip hose (A) of the present invention is partitioned into a plurality of unit sections (3) and the water supplied through the first water pathway (1) is supplied to each unit section (3) to be discharged, even if foreign matter enters the inside of the drip hose (A), the foreign matter is passed only to any one of the unit sections (3) to interfere with only one water discharge port (11b), therefore, due to such a structure, clogging phenomenon caused by the foreign matter is minimized.

Furthermore, in each unit section (3), one water supply port (11a), one water discharge port (11b) and one opening (11c) are formed and the forming positions thereof are in zigzags, namely, water pathway with a certain length or longer length is ensured for each unit section (3), thus the pressure of the water can be kept constant.

In the drip hose (A), as shown in Fig. 10, the longitudinal fusion line (11") is not additionally formed in the middle of the unit section (3), and thus the second water pathway (2) is not be partitioned into at least two unit water pathways (21, 21'), in which case, the water supply port (11a) is formed in one side of any one of the longitudinal fusion lines (11) constituting the unit section (3), and the water discharge port (11b) is formed in the other side of the other of the longitudinal fusion lines (11), therefore, the water, which has passed through the water supply port (11a), cannot be directly discharged to the water discharge port (11b) without passing through the second water pathway (2) which is different from the present invention.

The drip hose (A) of the present invention is installed after or before sowing seeds of the crops, wherein, as shown in Fig. 11, the drip hose (A) may be installed only on one side of the crops (sowing position) or on both sides thereof, and the formation or number of the installation is not limited.

As stated above, the present invention has been described only for the above examples, but various modifications may be naturally made without departing from the scope of the claims.

## Claims

1. A drip hose (A) formed by fusing both ends of flat resin film (10), wherein the both ends of the flat resin film (10) are overlapped and fused in such a way that two fusion lines (11) are formed in the longitudinal direction, thus by means of the fusion lines (11), a first water pathway (1) is formed and a second water pathway (2) is formed in overlap portion, and at least one fusion line (11') is additionally formed in the width direction in the overlap portion, thus the overlap portion is partitioned into at least one unit section (3), and water supply port (11 a) for supplying the water from the first water pathway (1) to the second water pathway (2) and water discharge port (11b) for discharging the water from the second water pathway (2) to the outside are formed in the longitudinal fusion lines (11) constituting the unit section (3), and at least one fusion line (11") is additionally formed in the longitudinal direction in the middle of the unit section (3), and at least two unit water pathways (21, 21') are formed in the unit section (3), and an opening (11c) is formed in the additionally formed fusion line (11 ") to allow the at least two unit water pathways (21, 21') to communicate with each other, and the water supply port (11a) is formed in one side of any one of the longitudinal fusion lines (11) constituting the unit section (3), the opening (11c) is formed in the other side of the additionally formed fusion line (11"), and the water discharge port (11 b) is formed in one side of the other of the longitudinal fusion lines (11) constituting the unit section (3),
**characterised in that** the flat resin film (10) is formed on its one surface with fine unevenness part (10a), thus the insides of the first water pathway (1) and second water pathway (2) have the fine unevenness part (10a), wherein the fine unevenness part (10a) is provided with projections formed on the whole of one surface of the flat resin film (10).

2. The drip hose according to claim 1, wherein the fusion lines (11,11',11") are formed by means of thermal fusion or high-frequency fusion, and the unit section (3) is formed with the same length.

## Patentansprüche

1. Tropfschlauch (A), der durch Verschmelzen von beiden Enden eines flachen Harzfilms (10) gebildet ist, wobei die beiden Enden des flachen Harzfilms (10) derart überlappen und verschmolzen sind, dass zwei Verschmelzungslinien (11) in die Längsrichtung gebildet sind, so dass mittels der Verschmelzungslinien (11) ein erster Wasserpfad (1) gebildet ist und ein zweiter Wasserpfad (2) in einem Überlappungsbereich gebildet ist, und mindestens eine Verschmelzungslinie (11') zusätzlich in die Breiterichtung in dem Überlappungsbereich gebildet ist, so dass der Überlappungsbereich in mindestens einen Einheitsabschnitt (3) unterteilt ist, und eine Wasserzufuhröffnung (IIa) zum Zuführen des Wassers von dem ersten Wasserpfad (1) zu dem zweiten Wasserpfad (2) und eine Wasserablassöffnung (IIb) zum Ablassen des Wassers aus dem zweiten Wasserpfad (2) nach außen in den längs verlaufenden, den Einheitsabschnitt (3) bildenden Verschmelzungslinien (11) gebildet sind und mindestens eine Verschmelzungslinie (11") zusätzlich in die Längsrichtung in der Mitte des Einheitsabschnitts (3) gebildet ist und mindestens zwei Einheitswasserpfade (21, 21') in dem Einheitsabschnitt (3) gebildet sind und eine Öffnung (11c) in der zusätzlich gebildeten Verschmelzungslinie (11") gebildet ist, um zu ermöglichen, dass die mindestens zwei Einheitswasserpfade (21, 21') miteinander kommunizieren, und die Wasserzufuhröffnung (11a) in einer Seite einer der längs verlaufenden, den Einheitsabschnitt (3) bildenden Verschmelzungslinien (11) gebildet ist, wobei die Öffnung (11c) in der anderen Seite der zusätzlich gebildeten Verschmelzungslinie (11") gebildet ist und die Wasserablassöffnung (11b) in einer Seite der anderen der längs verlaufenden, den Einheitsabschnitt (3) bildenden Verschmelzungslinien (11) gebildet ist,
**dadurch gekennzeichnet, dass** der flache Harzfilm (10) mit einem Teil (10a) mit feiner Unebenheit auf seiner einen Oberfläche gebildet ist, so dass die Innenseiten des ersten Wasserpfads (1) und des zweiten Wasserpfads (2) den Teil (10a) mit feiner Unebenheit aufweisen, wobei der Teil (10a) mit feiner Unebenheit mit Vorsprüngen versehen ist, die auf einer gesamten Oberfläche des flachen Harzfilms (10) gebildet sind.

2. Tropfschlauch nach Anspruch 1, wobei die Verschmelzungslinien (11,11',11 ") mittels thermischer Verschmelzung oder Hochfrequenzverschmelzung gebildet sind und der Einheitsabschnitt (3) mit der gleichen Länge gebildet ist.

## Revendications

1. Tuyau goutte à goutte (A) formé par fusion des deux extrémités d'un film de résine plat (10), dans lequel les deux extrémités du film de résine plat (10) sont superposées et fondues de sorte que deux lignes de fusion (11) soient formées dans la direction longitudinale, ainsi au moyen des lignes de fusion (11), un premier trajet d'eau (1) est formé et un deuxième trajet d'eau (2) est formé dans une partie de superposition, et au moins une ligne de fusion (11') est, en outre, formée dans la direction de la largeur dans la partie de superposition, ainsi la partie de superposition est divisée en au moins une section unitaire (3), et un orifice d'alimentation en eau (11a) destiné à alimenter l'eau depuis le premier trajet d'eau (1) vers le deuxième trajet d'eau (2) et un orifice d'évacuation d'eau (11b) destiné à évacuer l'eau du deuxième trajet d'eau (2) vers l'extérieur sont formés dans les lignes longitudinales de fusion (11) constituant la section unitaire (3), et au moins une ligne de fusion (11") est, en outre, formée dans la direction longitudinale au milieu de la section unitaire (3), et au moins deux trajets d'eau unitaires (21, 21') sont formés dans la section unitaire (3), et une ouverture (11c) est formée dans la ligne de fusion (11'') supplémentaire formée pour permettre aux au moins deux trajets unitaires d'eau (21, 21') de communiquer l'un avec l'autre, et l'orifice d'alimentation en eau (11a) est formé dans un côté de l'une quelconque des lignes de fusion longitudinales (11) constituant la section unitaire (3), l'ouverture (11c) est formée dans l'autre côté de la ligne de fusion (11'') supplémentaire formée, et l'orifice d'évacuation d'eau (11b) est formé dans un côté de l'autre des lignes de fusion longitudinales (11) constituant la section unitaire (3), **caractérisé en ce que**
le film de résine plat (10) est formé sur sa surface avec une partie à légère irrégularité (10a), ainsi l'intérieur du premier trajet d'eau (1) et du deuxième trajet d'eau (2) ont la partie à légère irrégularité (10a), dans lequel la partie à légère irrégularité (10a) est munie de saillies formées, dans leur ensemble, d'une surface du film de résine plat (10).

2. Tuyau goutte à goutte selon la revendication 1, dans lequel les lignes de fusion (11, 11', 11'') sont formées par fusion thermique ou par fusion haute fréquence, et la section unitaire (3) est formée de manière à avoir la même longueur.
